Europäisches Patentamt

European Patent Office

Office européen des brevets

(11) Veröffentlichungsnummer: **0 471 179 A1**

## EUROPÄISCHE PATENTANMELDUNG

(21) Anmeldenummer: **91111106.0**

(51) Int. Cl.5: **B23K 26/00**

(22) Anmeldetag: **04.07.91**

(30) Priorität: **11.08.90 DE 4025566**

(43) Veröffentlichungstag der Anmeldung:
**19.02.92 Patentblatt 92/08**

(84) Benannte Vertragsstaaten:
**DE ES FR GB IT**

(71) Anmelder: **AUDI AG**
**Postfach 10 02 20**
**W-8070 Ingolstadt(DE)**

(72) Erfinder: **Bergmann, Hans-Wilhelm, Prof.Dr.**
**Irisstrasse 9**
**W-8501 Eckental-Brand(DE)**
Erfinder: **Lindner, Horst**
**Silesiusstrasse 1**
**W-8070 Ingolstadt(DE)**

(54) Verfahren zum Entgraten der Kanten metallischer Bauteile.

(57) Die Erfindung betrifft ein Verfahren zum Entgraten der Kanten metallischer Bauteile mittels Laserenergie, wobei zur Erzielung einer zuverlässigen gleichmäßigen Entgratung auch bei geometrisch komplizierten Bauteilen die Laserenergie defokusiert im Kantenbereich aufgebracht und so niedrig gehalten wird, daß außer am Grat kein Plasma und keine metallurgische Umwandlung auftritt, wobei während der Laserbehandlung die Kante mit Sauerstoff angeblasen wird.

Die Erfindung betrifft ein Verfahren zum Entgraten der Kanten metallischer Bauteile mittels Laserenergie.

Die Kanten eines Bauteiles mittels eines Lasers zu entgraten, ist beispielsweise durch die US-PS 44 73 735 bekannt. Dabei wird der Laserstrahl auf die Kante fokussiert und diese abgeschmolzen. Dieses Verfahren setzt aber eine hohe Genauigkeit bei der Positionierung zwischen Laser und Bauteil voraus und ist deshalb für viele Anwendungsfälle zu aufwendig; bei seriengefertigten größeren Bauteilen, beispielsweise dem Zylinderblock einer Hubkolben-Brennkraftmaschine, ist es jedenfalls nicht möglich, die einschlägigen Kanten insbesondere robotergesteuert zu entgraten.

Aufgabe der Erfindung ist es, ein Verfahren der gattungsgemäßen Art aufzuzeigen, mit dem auch komplizierte Bauteile mit gegebenenfalls nicht genau definiertem Kantenverlauf entgratet werden können, wobei das Entgraten gegebenenfalls automatisch durchführbar sein soll.

Diese Aufgabe wird erfindungsgemäß mit den kennzeichnenden Merkmalen des Patentanspruches 1 gelöst. Besonders vorteilhafte Weiterbildungen der Erfindung sind den weiteren Patentansprüchen entnehmbar.

Erfindungsgemäß wird vorgeschlagen, nicht die Kante bzw. den Grat im eigentlichen Sinne, sondern den Kantenbereich mit Laserenergie zu beaufschlagen und zugleich diesen Bereich mit Sauerstoff anzublasen. Die emittierte Laserenergie wird dabei so niedrig gehalten, daß nur an der Kante in Verbindung mit dem Sauerstoff eine Oxidation auftritt, die die Kante zum Abschmelzen bringt. Während im Kantenbereich die durch den Laser erzeugte Wärme ohne Plasmabildung bzw. ohne jegliche Umwandlung in das Bauteil eindringt, wird aufgrund der geringen Massekonzentration und der schlechteren Wärmeabführung an der Kante bzw. am Grat dieser aufgeheizt und durch Sauerstoffzufuhr aboxidiert. Der Vorteil liegt dabei darin, daß mit wesentlich verringerter Genauigkeitsanforderung der Kantenbereich von dem defokussierten, also einen größeren Brennfleck aufweisenden Laserstrahl abgefahren und dabei der Grat entfernt wird.

Besonders vorteilhaft kann in Weiterbildung des Verfahrens das Abfahren dieses Kantenbereiches robotergesteuert erfolgen, wobei sich insbesondere der Einsatz eines Lichtleitkabels bewährt hat. Das Lichtleitkabel kann ohne aufwendige Laseroptik an dem Arm des Roboters angeordnet und somit in nahezu allen Freiheitsgraden verschwenkt an den Kanten des Bauteiles entlang geführt werden. Das Lichtleitkabel weist in bekannter Weise Lichtleitfasern (Glasfasern) auf, in das die Laserenergie eingekoppelt wird. Als Laser bietet sich insbesondere der ND:YAG-Festkörperlaser an.

Als besonders vorteilhaft hat es sich ferner erwiesen, wenn im Kantenbereich die Temperatur des Bauteiles überwacht wird und die Laserleistung online so geregelt wird, daß ein definiertes Temperaturintervall eingehalten wird. Dadurch kann unter besonders präziser Einhaltung der Vorgaben nach Patentanspruch 1 den Masseverteilungen und Kantenverläufen des Bauteiles Rechnung getragen werden bzw. eine zuverlässige und gleichmäßige Entgratung erzielt wird. Bei stets gleichen Bauteilen kann jedoch auch nach Erfahrungswerten oder nach einer einmaligen Ermittlung des Temperaturverlaufes mit unterschiedlichen Laserleistungen entgratet werden.

Die Robotersteuerung kann - eine moderne Fertigung vorausgesetzt - nach dem teach in-Verfahren oder CAD-CAM gesteuert erfolgen. Bei dem ersteren Verfahren wird der Roboterarm beim teach-in an dem zu entgratenden Kanten entlangeführt, wobei über dessen Prozeßsteuerung die Koordinaten des Kantenverlaufes gespeichert und im späteren Betrieb abgefahren werden. Bevorzugt wird jedoch vorgeschlagen, die Robotersteuerung über ein Bildverarbeitungssystem online durchzuführen, was sich insbesondere bei undefinierten Kantenverläufen als besonders vorteilhaft erwiesen hat. Dabei ist am Roboterarm eine digitale Videokamera angeordnet, die über ein Bildfenster die durch die Kante vorgegebene Hell-Dunkel-Grenze erfaßt und online den Roboterarm entlang dieser Hell-Dunkel-Grenze steuert.

Die Temperatur des Kantenbereiches des Bauteiles kann entweder mittels eines Pyrometers oder spektral online ermittelt und dadurch die Laserleistung exakt geregelt werden. Ein Verfahren zur spektralen Ermittlung der Bauteiltemperatur ist beispielsweise in der Patentanmeldung P 39 36 059.8 beschrieben.

Ein Ausführungsbeispiel der Erfindung ist im folgenden anhand einer schematischen Zeichnung näher beschrieben.

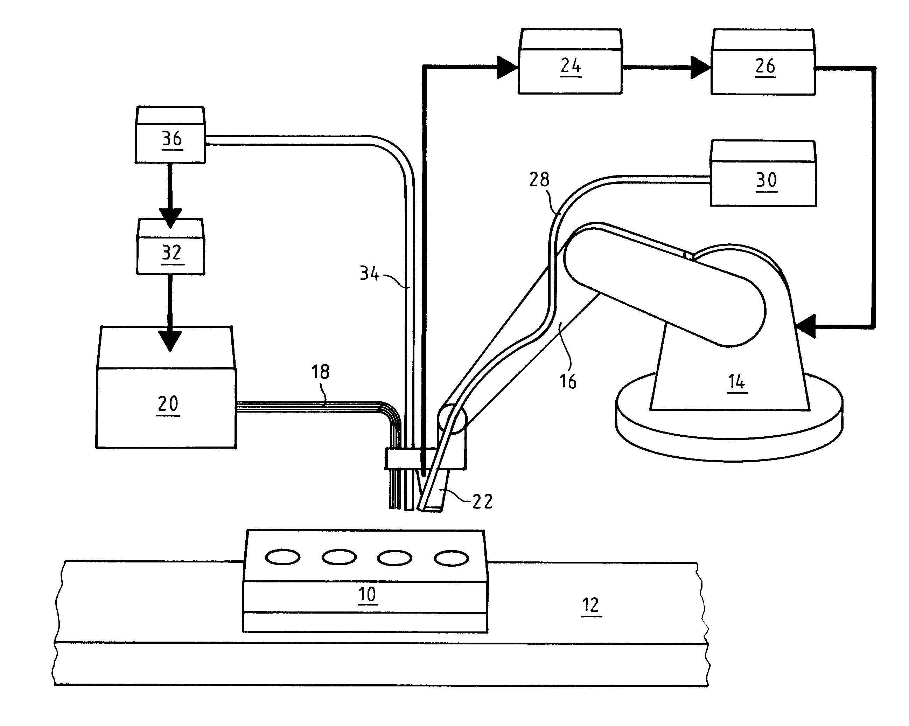

In der Zeichnung ist mit 10 ein Zylinderblock für eine Hubkolben-Brennkraftmaschine dargestellt, der auf einer Fördereinrichtung 12 relativ zu einem Handhabungsautomaten bzw. Roboter 14 positioniert ist. An den Zylinderblock 10 sollen diverse, nicht näher bezeichnete Kanten von Bearbeitungsflächen entgratet werden.

Dazu ist an dem über mehrere Gelenke in nahezu allen Freiheitsgraden schwenkbaren Arm 16 des Roboters 14 ein Lichtleitkabel 18 aus Glasfasern befestigt, über welches Laserenergie von dem ND:YAG-Festkörperlaser 20 in defokussierter Form (Brennfleck ca. 5 mm im Durchmesser) emittierbar ist.

An dem Arm 16 des Roboters 14 ist ferner eine Videokamera 22 angeordnet, die in Ausrichtung mit dem Lichtleitkabel 18 digital die Position des zu entgratenden Kantenbereiches aufzeichnet. Die Signale werden einer EDV-Anlage 24 zugeleitet und durch Auswertung der Hell/Dunkel-Anteile eines Auswertefensters die Position des Armes 16 des Roboters 14 berechnet und online entsprechende Steuersignale der Robotersteuerung 26 übermittelt, so daß der Arm 16 entlang der zu entgratenden Kante nach dem Bildverarbeitungssystem geführt wird.

Über einen Schlauch 28 mit einer Ausblasdüse, der ebenfalls an dem Arm 16 des Roboters 14 festgelegt ist, kann der zu entgratende Kantenbereich mit Sauerstoff oder einem sauerstoffhaltigen Gas angeblasen werden. Der Schlauch 28 ist an einen Sauerstoffbehälter 30 angeschlossen, dessen Ventil parallel mit der Lasersteuerung verbunden ist.

Die Laserenergie wird von einem Steuergerät 32 gesteuert, wobei diese Energie so begrenzt ist, daß in keinem Falle eine die Plasmaschwelle des metallischen Bauteiles bzw. im Ausführungsbeispiel des Zylinderblockes 10 überschreitende Strahlung oder auch nur eine eine metallurgische Umwandlung bewirkende Strahlung stattfindet.

Zusätzlich ist ein Kabel 34 am Arm 16 des Roboters 14 vorgesehen, welches mit einem Pyrometer 36 verbunden ist. Im Pyrometer 36 wird die lokale Temperatur im Kantenbereich ermittelt und online durch Ansteuerung des Steuergerätes 32 die Laserenergie nachgeregelt.

Bei dem Verfahren zum Entgraten der Kanten des Zylinderblockes 10 wird zunächst der Zylinderblock 10 der nur schematisch dargestellten Bearbeitungsstation zugeführt und in einer definierten Position gestoppt. Danach wird über die Robotersteuerung 26 der Arm 16 des Roboters 14 an eine definierte Position gefahren, an der das Entgraten der Kanten beginnen soll. Anschließend wird das Bildverarbeitungssystem mit der Videokamera 22 und der EDV-Anlage 24 in Betrieb gesetzt und der Arm 16 in definierter Weise an den Kanten entlang geführt. Zugleich wird über das Steuergerät 32 der Laser 20 aktiviert und über das Lichtleitkabel 18 Laserenergie emittiert. Mit dem Einschalten des Lasers 20 wird auch das Ventil des Sauerstoffbehälters 30 geöffnet und über den Schlauch 28 mit der Ausblasdüse Sauerstoff auf den Kantenbereich geblasen. Über das Kabel 34 und das Pyrometer 36 wird die Temperatur der abgefahrenen Kantenbereiche überwacht.

Durch die Energie der Laserstrahlen werden die Kanten bzw. deren Grate erhitzt und durch die gleichzeitige Zuführung von Sauerstoff aboxidiert. Die unmittelbar an die Grate anschließenden Kantenbereiche bleiben in Temperaturbereichen, die eine metallurgische Umwandlung oder ein einkoppeln des Laserstrahles oberhalb der Plasmaschwelle ausschließen. Durch die Defokussierung des Laserstrahles können Toleranzabweichungen zwischen Kanten und Laserstrahl von mehreren Millimetern auftreten, ohne daß die Gleichmäßigkeit und Güte der Entgratung vermindert ist.

**Patentansprüche**

1. Verfahren zum Entgraten der Kanten metallischer Bauteile mittels Laserenergie, **dadurch gekennzeichnet**, daß
   a) die Laserenergie defokussiert im Kantenbereich aufgebracht wird,
   b) die Laserenergie so niedrig gehalten wird, daß außer am Grat kein Plasma und keine metallurgische Umwandlung am Bauteil auftritt, und
   c) während der Laserbehandlung die Kante mit Sauerstoff angeblasen wird.

2. Verfahren nach Anspruch 1, **dadurch gekennzeichnet**, daß die Laserleistung robotergesteuert über ein Lichtleitkabel (Lichtleitfasern) aufgebracht wird.

3. Verfahren nach Anspruch 1 oder 2, **dadurch gekennzeichnet**, daß die Temperatur des Bauteiles im Kantenbereich überwacht und online die Laserleistung geregelt wird.

4. Verfahren nach einem oder mehreren der Ansprüche 1 bis 3, **dadurch gekennzeichnet**, daß die Robotersteuerung über ein Bildverarbeitungssystem online erfolgt.

Europäisches
Patentamt

# EUROPÄISCHER RECHERCHENBERICHT

Nummer der Anmeldung

## EP 91 11 1106

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 081 655   (CATERPILLAR TRACTOR CO.)<br>* das ganze Dokument *<br>– – – | 1,2 | B 23 K 26/00 |
| A | EP-A-0 027 707   (METAL BOX LIMITED)<br>* Anspruch 1; Figuren 3,5,6 *<br>– – – | 1 | |
| A | US-E-32 511   (L-TEC COMPANY)<br>* das ganze Dokument<br>– – – | 1 | |
| A,D | EP-A-0 038 297   (LASAG AG)<br>* Seite 3, Zeile 19 - Zeile 25; Seite 5, Zeile 14 - Seite 8, Zeile 15; Seite 17, Zeile 17 - Seite 20, Zeile 5; Figuren 1,2,4,6 *<br>– – – – – | 1,3 | |
| | | | **RECHERCHIERTE SACHGEBIETE (Int. Cl.5)**<br><br>B 23 K |

Der vorliegende Recherchenbericht wurde für alle Patentansprüche erstellt

| Recherchenort | Abschlußdatum der Recherche | Prüfer |
|---|---|---|
| Den Haag | 19 November 91 | ARAN D.D. |